# EUROPÄISCHE PATENTANMELDUNG

(11) **EP 1 283 165 A2**
(43) Veröffentlichungstag der Anmeldung: **12.02.2003**
(21) Anmeldenummer: 02015806.9
(22) Anmeldetag: 15.07.2002
(51) Int. Cl.: B64D 13/06

(54) **Klimatisierungssystem**

(30) Priorität: 10.08.2001 DE 10139483
(71) Anmelder: Liebherr-Aerospace Lindenberg GmbH, 88161 Lindenberg/Allgäu (DE)
(72) Erfinder: Haas, Joachim, 88239 Wangen (DE)
(74) Vertreter: Herrmann, Uwe

(57) **Zusammenfassung**

Die vorliegende Erfindung betrifft ein Klimatisierungssystem zur Klimatisierung eines Raumes, insbesondere zur Klimatisierung einer Flugzeugkabine mit einem Wärmetauscher zur Kühlung eines von einem Triebwerk oder Hilfsaggregat stammenden Druckluftstroms (Zapfluftstrom) sowie mindestens einer Entspannungseinrichtung pro Air-Cycle-Machine (ACM) zur Entspannung und Abkühlung komprimierter Luft, wobei die Entspannungseinrichtungen dem Wärmetauscher (6) nachgeschaltet sind und auslaßseitig mit einer Mischkammer bzw. dem zu klimatisierenden Raum in Verbindung stehen. Eine hohe Kühlleistung auch bei Ausfall einer der Entspannungseinrichtungen oder einer Air-Cycle-Machine wird dadurch erreicht, daß der Wärmetauscher druckluftseitig in zwei Wärmetauschereinheiten getrennt ist, deren Einlaß jeweils mit Druckluft beaufschlagt wird, wobei die Wärmetauschereinheiten derart verschaltet sind, daß eine Strömung der Druckluft von dem Auslaß der einen zu der anderen Wärmetauschereinheit unterbunden wird, und wobei die Wärmetauschereinheiten auslaßseitig über eine Bypassleitung mit dem zu klimatisierenden Raum bzw. der Mischkammer oder dem Auslaß des Klimatisierungssystems verbindbar sind.

## Beschreibung

Die vorliegende Erfindung betrifft ein Klimatisierungssystem zur Klimatisierung eines Raumes, insbesondere zur Klimatisierung einer Flugzeugkabine mit einem Wärmetauscher zur Kühlung eines von einem Triebwerk oder Hilfsaggregat stammenden Druckluftstroms (Zapfluftstrom) sowie mit mindestens einer Entspannungseinrichtung pro Air-Cycle-Machine (ACM) zur Entspannung und Abkühlung komprimierter Luft, wobei die Entspannungseinrichtungen dem Wärmetauscher nachgeschaltet sind und auslaßseitig mit einer Mischkammer bzw. dem zu klimatisierenden Raum in Verbindung stehen.

Derartige Klimatisierungssysteme werden beispielsweise zur Klimatisierung einer Flugzeugkabine benötigt, um die Kabine zu heizen bzw. zu kühlen, um das gewünschte Druckniveau in der Kabine einzustellen und um Passagiere und Besatzung mit Frischluft zu versorgen. Derartige vorbekannte Klimatisierungssysteme für Flugzeugkabinen umfassen in der Regel einen ersten und einen zweiten Wärmetauscher, die aus den Triebwerken oder Hilfstriebwerken abgeführte Zapfluft vorkühlen, wobei die Kühlleistung der Wärmetauscher im Bodenbetrieb des Flugzeuges mittels im Stauluftkanal angeordneter Gebläse und im Flug aufgrund des Staudruckes erbracht wird. Ferner sind im allgemeinen sogenannte Air-Cycle-Machines (ACM) vorgesehen, die aus mindestens einer Turbinenstufe mit einem Gebläse oder bzw. und Kompressor bestehen, die fest auf einer Welle angeordnet sind. Der Kompressor verdichtet die aus dem ersten Wärmetauscher strömende Druckluft, die sodann in den zweiten Wärmetauscher geführt wird. An diesen schließt sich im allgemeinen ein Hochdruck-Wasserabscheide-Kreislauf an, der der Turbine vorgeschaltet ist und der der Druckluft vor Einleitung in die Turbine einen wesentlichen Teil der Feuchtigkeit entzieht. Die auf diese Weise entfeuchtete Luft wird in den Turbinen entspannt und abgekühlt, anschließend mittels des Hochdruck-Wasserabscheide-Kreislaufs geringfügig erwärmt und anschließend in eine Mischkammer des Flugzeuges geleitet. Hier wird die konditionierte Luft mit im Kreislauf geführter Luft der Flugzeugkabine vermengt und anschließend der Flugzeugkabine zugeführt.

Insbesondere beim Einsatz derartiger Klimatisierungssysteme in Flugzeugen ist von Bedeutung, daß das System weitgehend fehlerfrei arbeitet und daß im Falle eines Fehlers eine erhebliche Leistungsminderung oder gar ein Totalausfall nur mit sehr geringer Wahrscheinlichkeit auftreten. Aus diesen Gründen wurde vorgeschlagen, daß die weniger zuverlässigen Komponenten, wie beispielsweise die Air-Cycle-Machine doppelt vorhanden sind und die zuverlässigen Komponenten, wie z. B. die Wärmetauscher sowie der Hochdruck-Wasserabscheide-Kreislauf nur einfach vorgesehen werden. Ein derartiges Klimatisierungssystem ist beispielsweise aus der U.S. 5,704,218 bekannt.

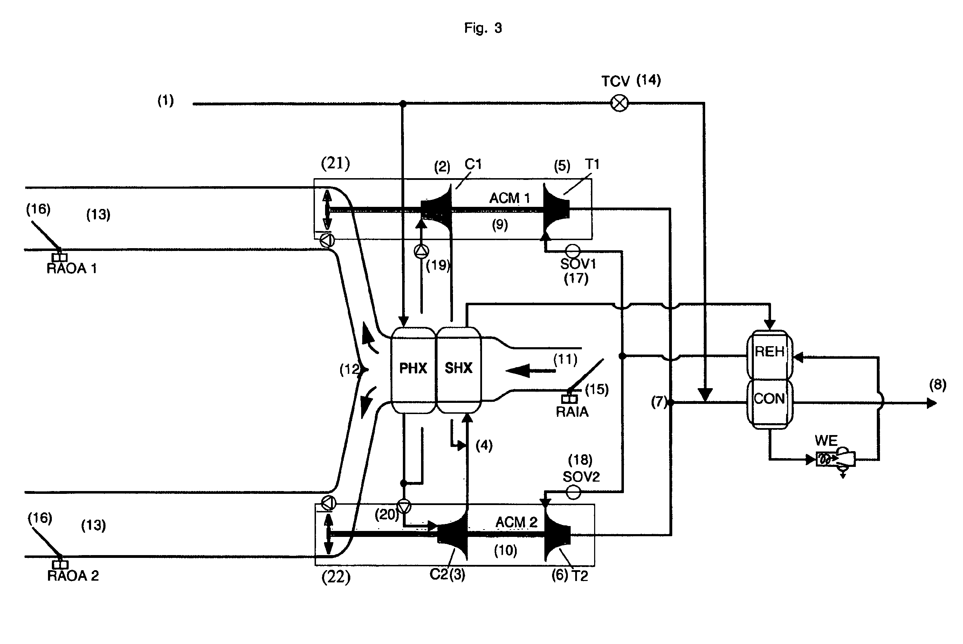

Die Funktionsweise eines Klimatisierungssystems mit zweifach ausgeführter Air-Cycle-Machine sowie mit einfach ausgeführtem Hochdruck-Wasserabscheide-Kreislauf und einfach vorgesehenen Wärmetauschern wird anhand von Fig. 3 erläutert:

Heiße Druckluft 1 (Zapfluft) wird von den Triebwerken oder einem Hilfsaggregat dem System mit 1,5 bis 3,5 bar und 150 °C bis 230 °C zugeführt. Im Bodenbetrieb wird die Zapfluft einem Hilfstriebwerk entzogen und dem System mit etwa 3 bar zugeführt. Der Zapfluftstrom wird zunächst durch einen Primärwärmetauscher PHX ("Primary Heat Exchanger") geleitet und hierbei auf etwa 100 °C vorgekühlt. Jeweils etwa die Hälfte dieser Druckluft wird im Kompressor C1 (2) bzw. im Kompressor C2 (3) auf ca. 4,5 bar verdichtet. Die Temperatur des verdichteten Druckluftstromes beträgt ca. 160 °C. Nach der Zusammenführung 4 wird der Druckluftstrom im Wärmetauscher SHX auf ca. 45 °C abgekühlt.

Die Luft wird nunmehr in den sogenannten Hochdruck-Wasserabscheide-Kreislauf geleitet. Dieser umfaßt einen Kondensator CON sowie einen dem Kondensator vorgeschalteten Wärmetauscher REH. Dem Kondensator nachgeschaltet ist der Wasserabscheider WE ("Water Extractor"). In dem Kondensator wird die komprimierte und gekühlte Zapfluft um ca. 15 °C abgekühlt und das kondensierte Wasser im Wasserabscheider abgetrennt. Der Wärmetauscher erwärmt die aus dem Wasserabscheider ausgetretende Luft um ca. 5 °C, was erforderlich ist, um die noch in der Druckluft vorhandene Restfeuchte zu verdampfen, bevor die Luft in die Turbinen geführt wird. Darüber hinaus kommt dem Wärmetauscher die Aufgabe zu, die Druckluft vor Eintritt in den Kondensator entsprechend vorzukühlen.

Nach Austritt aus dem Wärmetauscher REH wird der Luftstrom aufgeteilt und jeweils etwa die Hälfte wird in die Turbine T1 (5) bzw. T2 (6) geführt. Hier entspannt sich die Druckluft auf den Kabinendruck von ca. 1 bar. Ferner wird die Luft auf ca. - 30 °C am Turbinenausgang abgekühlt. Nach der Zusammenführung 7 der entspannten Luftströme wird die Luft durch die kalte Seite des Kondensators CON geleitetet, wobei sie sich auf ca. -15 °C erwärmt.

Die auf diese Weise konditionierte Luft wird in der nicht näher dargestellten Mischkammer 8 mit rezirkulierter Kabinenluft gemischt.

Jede der Kühlturbineneinheiten ACM1, ACM2 (9, 10) besteht aus mindestens einer Turbinenstufe mit einem Gebläse oder Kompressor, in dem Beispiel gemäß Fig.3 aus den drei Rädern Kompressor 2, 3, Turbine 5, 6 sowie Gebläse 21, 22. Diese drei Räder sind durch die Welle fest miteinander verbunden. Im Bodenbetrieb wird das Gebläse 21, 22 und der Kompressor 2, 3 aktiv durch die Turbinen 5, 6 angetrieben. Im Flugbetrieb nimmt der Kompressor fast die gesamte Turbinenleistung auf. Die Stauluftmenge kann gegebenenfalls durch regelbare Klappen 15, 16 am Eintritt des Stauluftkanals 11 bzw. am Austritt der Teilkanäle 13 gedrosselt werden. In dem Stauluftkanal 11 sind die Wärmetauscher SHX und PHX angeordnet. Nach Durchströmen des Wärmetauschers PHX wird die Stauluft auf die beiden Teilkanäle 13 an der Stelle 12 aufgeteilt. Nach Durchströmen der Teilkanäle 13 strömt die Luft an die Umgebung zurück.

Die Temperaturregelung der der Mischkammer 8 zugeführten Kühlluft erfolgt in der Regel mittels eines oder zweier Ventile TCV 14 und den Stauluftklappen 15, 16.

Ein typischer Fehlerfall bei dem in Fig. 3 beschriebenen Klimatisierungssystem ist der Ausfall einer Kühlturbineneinheit (Air-Cycle-Machine ACM). Auch in diesem Fall muß gewährleistet sein, daß eine bestimmte Kühlluftmenge und Kühlleistung bereitgestellt werden. Für einen derartigen Fehlerfall sind zwei Ventile SOV1 und SOV2 17, 18 vorgesehen, mittels derer die Einlaßseiten der Turbinen 5, 6 absperrbar sind. Ferner sind zwei Rückschlagventile 19, 20 im Bereich des Einlasses der Kompressoren 2, 3 vorgesehen.

Fällt beispielsweise die in Fig. 3 oben angeordnete Kühlturbineneinheit 9 aus, verhindert das Rückschlagventil 19, daß die vom in Betrieb befindlichen Kompressor 3 verdichtete Luft über den Kompressor 2 zurückströmt und damit wieder auf der Eingangsseite des Kompressors 3 anliegt. Das Rückschlagventil 19 verhindert einen derartigen, nutzlosen Kreisstrom. Ferner wird das Ventil SOV1 17 geschlossen, damit die vom Kompressor 3 verdichtete Luft nicht über die stehende Turbine 5, sondern ausschließlich über die funktionierende Turbine 6 strömt und hier entspannt wird.

Da in einem derartigen Fehlerfall dennoch die erforderliche Gesamtluftmenge benötigt wird, müßte die funktionierende Kühlturbineneinheit ACM2 (10) nunmehr 100 % des Luftstromes fördern, was jedoch nicht möglich ist, da jede ACM nur auf ca. 50 % der benötigten Gesamtluftmenge ausgelegt ist. Es ist daher erforderlich, die nicht funktionierende Kühlturbineneinheit durch eine Bypassleitung zu umgehen. In dieser Bypassleitung ist das Ventil TCV 14 angeordnet, bei dessen Öffnung von der Zapfluft 1 ein Teil unmittelbar vor den Kondensator CON eingespeist und dann der Mischkammer 8 zugeführt wird.

Eine derartige Vorgehensweise hat den Nachteil, daß die warme, über das Ventil 14 strömende Luft mit der gekühlten Turbinenluft am Turbinenauslaß (nach dem Mischpunkt 7) gemischt wird, wodurch die Kühlleistung des Systems entsprechend reduziert wird. Der Verlust an Kühlleistung muß durch größere Wärmetauscher (PHX, SHX) kompensiert werden, was gleichbedeutend ist mit erhöhtem Platzbedarf und Gewicht. Beide Parameter sind jedoch insbesondere im Flugzeugbau engen Grenzen unterzogen, so daß eine derartige Lösung unbefriedigend ist.

Alternativ dazu wäre denkbar, den Ausfall einer ACM teilweise dadurch zu kompensieren, daß beide ACM überdimensioniert werden. Beispielsweise wäre denkbar, jede der ACM's auf 70 % des Gesamtdurchsatzes auszulegen. Auch in diesem Fall ergibt sich als Nachteil ein höheres Gewicht bzw. höhere Abmessungen der ACMs.

Der oben beschriebene Bypass einer Kühlturbineneinheit ACM ist nicht nur dann erforderlich, wenn diese defekt ist, sondern dient auch dazu, die Durchlässigkeit des Klimatisierungssystems zu erhöhen. Dies ist erforderlich, da bei Flugzeugtriebwerken die Tendenz besteht, daß die Drücke für die Zapfluft immer geringer werden. Die Erhöhung der Durchlässigkeit wird mit dem oben beschriebenen Bypass über das Ventil TCV 14 erreicht. Auch in diesem Fall besteht der Nachteil, daß warme Luft mit der kalten Luft von der Turbine vermischt wird, was die Kühlleistung entsprechend reduziert. Auch in diesem Fall müßte der Verlust an Kühlleistung durch größere Wärmetauscher kompensiert werden, was wie oben angedeutet unerwünscht ist.

Beide oben beschriebenen Fälle, nämlich der Ausfall einer ACM sowie das weitere Öffnen des TCVs zur Erhöhung der Durchlässigkeit des Klimatisierungssystems, führen dazu, daß der SHX, der hauptsächlich verantwortlich für die Wärmeabgabe nach außen ist, nur teilweise durchströmt wird. Dadurch kann nicht das gesamte Kühlpotential des SHX genutzt werden, was den Nachteil mit sich bringt, daß dieses durch größere Wärmetauscher PHX, SHX und dementsprechendes Mehrgewicht kompensiert werden muß.

Es ist daher die Aufgabe der vorliegenden Erfindung bei einem Klimatisierungssystem der eingangs genannten Art auch bei geringen Zapfluftdrücken und bei Ausfall einer Entspannungseinrichtung eine hohe Kühlleistung und Durchlässigkeit sicherzustellen, wobei das Gewicht, die Abmessungen sowie die Kosten des Klimatisierungssystems gering gehalten werden sollen und gleichzeitig eine hohe Zuverlässigkeit des Systems gwährleistet ist.

Diese Aufgabe wird durch ein Klimatisierungssystem mit den Merkmalen des Patentanspruchs 1 gelöst.

Danach ist zumindest der SHX-Wärmetauscher druckluftseitig in zwei Wärmetauschereinheiten getrennt, deren Einlaß jeweils mit Druckluft beaufschlagt wird, wobei die Wärmetauschereinheiten derart verschaltet sind, daß eine Strömung der Druckluft von dem Auslaß der einen zu der anderen Wärmetauschereinheit unterbunden wird, und wobei die Wärmetauschereinheiten auslaßseitig über eine Bypassleitung mit dem zu klimatisierenden Raum bzw. dem Auslaß des Klimatisierungssystems bzw. einer Mischkammer verbunden sind. Dadurch ergibt sich der Vorteil, daß auch bei Ausfall einer Turbine bzw. ACM der entsprechende Teil der Zapfluft durch den Wärmetauscher bzw. die zugehörige Wärmetauschereinheit geführt wird und damit die gesamte Kühlkapazität des entsprechenden Wärmetauschers genutzt wird. Auch bei Ausfall einer Entspannungseinrichtung bzw. Turbine bzw. einer ACM ist nicht der oben beschriebene ACM Bypass erforderlich, was den Vorteil mit sich bringt, daß keine warme Luft am Turbinenauslaß zugemischt wird. Ferner wird durch den Bypass des erfindungsgemäßen Klimatisierungssystems die Durchlässigkeit der Anlage erhöht, was bei geringen Zapfluftdrücken im Flug erforderlich ist. Gleichzeitig wird die gesamte Kühlkapazität des Wärmetauschers genutzt.

Gemäß einer vorteilhaften Ausgestaltung der vorliegenden Erfindung sind Rückschlagklappen vorgesehen, die in den Auslaßleitungen der Wärmetauschereinheiten angeordnet sind und die eine Strömung der Druckluft von dem Auslaß der einen zu der anderen Wärmetauschereinheit verhindern. Ist eine der Entspannungseinrichtungen bzw. Turbinen bzw. eine Kühlluftturbineneinheit ACM defekt, wird durch die Rückschlagklappen verhindert, daß die Druckluft von der unter Druck stehenden Wärmetauschereinheit auf die Auslaßseite der anderen Wärmetauschereinheit und von dort in die entsprechende Bypassleitung geführt wird.

Gemäß einer weiteren bevorzugten Ausgestaltung sind ein erster und ein zweiter Kompressor vorgesehen, deren Auslaß mit jeweils einer der Wärmetauschereinheiten in Verbindung steht.

Die Entspannungseinrichtungen können als erste und zweite Turbine ausgeführt sein, wobei die erste Turbine mit dem ersten Kompressor und die zweite Turbine mit dem zweiten Kompressor jeweils auf einer Welle angeordnet sind.

Zusätzlich oder anstatt eines Kompressors kann auf jeder der Wellen ein Gebläse angeordnet sein, das sich in einem Stauluftkanal des Klimatisierungssystems befindet. In diesem Fall sind die Kühlturbineneinheiten als sogenannte Drei-Rad-Maschinen Gebläse/Kompressor/Turbine ausgeführt. Jede ACM kann jedoch auch aus mehr als drei Rädern bestehen (z. B. Gebläse + Kompressor + 2 Turbinen).

Pro Air-Cycle-Machine kann mehr als ein Kompressor und/oder mehr als eine Turbine vorgesehen sein.

Der Wärmetauscher ist vorzugsweise in einem Stauluftkanal des Klimatisierungssystems angeordnet. In Strömungsrichtung der Stauluft ist diesem ein Primärwärmetauscher nachgeschaltet oder parallel geschaltet. Die Stauluft strömt somit bei nachgeschalteten Primärwärmetauscher durch den erfindungsgemäß aus zwei Wärmetauschereinheiten bestehenden SHX Wärmetauscher und anschließend durch den Primärwärmetauscher.

Ferner kann vorgesehen sein, daß der Primärwärmetauscher in zwei Primärwärmetauschereinheiten aufgetrent ist, so daß jeder Wärmetauschereinheit eine Primärwärmetauschereinheit derart zugeordnet ist, daß die Stauluft nach Durchströmen einer Wärmetauschereinheit in die zugehörige Primärwärmetauschereinheit geführt wird.

Den Wärmetauschereinheiten kann ein gemeinsamer oder getrennter Primärwärmetauscher zugeordnet sein, durch den die Stauluft nach Durchströmen der Wärmetauschereinheiten geführt wird.

Ferner kann vorgesehen sein, daß der Stauluftkanal stromabwärts des Primärwärmetauschers und/oder stromaufwärts des Wärmetauschers in zwei Teilkanäle getrennt ist, wobei in jedem der Teilkanäle stromabwärts des Primärwärmetauschers ein Gebläse angeordnet ist.

Während der Wärmetauscher druckluftseitig erfindungsgemäß in zwei Wärmetauschereinheiten getrennt ist, kann vorgesehen sein, daß der Wärmetauscher stauluftseitig derartig ausgeführt ist, daß die Stauluft gemeinsam oder getrennt durch die Wärmetauschereinheiten strömt.

In weiterer Ausgestaltung der vorliegenden Erfindung ist vorgesehen, daß der Primärwärmetauscher einlaßseitig mit der vom Triebwerk stammenden Zapfluft beaufschlagt wird und auslaßseitig mit den Kompressoren in Verbindung steht. Die Zapfluft bzw. Druckluft wird somit zunächst gemeinsam oder getrennt durch den Primärwärmetauscher geleitet und anschließend den Kompressoren zugeführt.

Besonders vorteilhaft ist es, wenn eine Bypassleitung vorgesehen ist, die jeweils die Einlaß- und die Auslaßseite des Kompressors miteinander verbindet, und in der eine Rückschlagklappe angeordnet ist. Diese Bypassleitung sorgt dafür, daß beim Ausfall der entsprechenden Kühlturbineneinheit ACM die aus dem Primärwärmetauscher austretende gekühlte Luft nicht über den nicht arbeitenden Kompressor geführt wird, sondern durch den Bypass. Eine Rückschlagklappe in der Bypassleitung verhindert im Betrieb einen Kreisstrom über den Kompressor.

In weiterer Ausgestaltung der vorliegenden Erfindung ist vorgesehen, daß der Primärwärmetauscher druckluftseitig derart ausgeführt ist, daß die Druckluft diesen gemeinsam oder getrennt durchströmt. Der Primärwärmetauscher kann beispielsweise, wie auch der Wärmetauscher auf der Druckluftseite, in zwei Primärwärmetauschereinheiten getrennt sein. Entsprechendes gilt für Stauluftseite.

Ferner kann ein Wasserabscheidekreislauf vorgesehen sein, der einlaßseitig mit dem Wärmetauscher und auslaßseitig mit den Entspannungseinrichtungen in Verbindung steht. Der Wasserabscheidekreislauf bewirkt den erforderlichen hohen Entfeuchtungsgrad der den Turbinen zuzuführenden Druckluft.

Zwischen den Entspannungseinrichtungen und dem Wasserabscheidekreislauf kann jeweils ein Absperrventil angeordnet sein. Diese Absperrventile dienen dazu, die nicht in Betrieb befindliche Entspannungseinrichtung bzw. Turbine nicht mit Druckluft zu beaufschlagen, sondern diese ausschließlich über die arbeitende Turbine zu führen, um die maximal mögliche Kühlleistung zu erzielen.

Ferner kann vorgesehen sein, daß eine Bypassleitung mit Absperrventil angeordnet ist, die zum Zwecke der Umgehung des Wasserabscheidekreislaufs den Wärmetauscher mit den Einlässen der Entspannungseinrichtung verbindet. In diesem Fall wird die aus den Wärmetauschereinheiten strömende Luft unmittelbar den Turbinen zugeführt, wodurch die Durchlässigkeit des Systems entsprechend erhöht wird.

In weiterer Ausgestaltung der vorliegenden Erfindung sind zwei Wasserabscheidekreisläufe vorgesehen, die einlaßseitig jeweils mit einer Wärmetauschereinheit und auslaßseitig mit jeweils einer der Entspannungseinrichtung in Verbindung stehen.

Gemäß einer bevorzugten Ausgestaltung der vorliegenden Erfindung sind Sensoren vorgesehen, mittels derer ein Defekt oder Ausfall einer Entspannungseinrichtung bzw. der ACM erfaßbar ist.

Die Sensoren können als Temperatur-, Druck- oder Drehzahlsensoren ausgeführt sein.

Jede Air-Cycle-Machine kann mindestens eine Turbinenstufe mit einem Gebläse oder mindestens einem Kompressor umfassen.

Weitere Einzelheiten und Vorteile der vorliegenden Erfindung werden anhand eines in den Zeichnungen dargestellten Ausführungsbeispiels näher erläutert. Es zeigen:
Fig. 1: eine schematische Darstellung eines Klimatisierungssystems gemäß der vorliegenden Erfindung,
Fig. 2: eine schematische Darstellung eines Klimatisierungssystems nach Fig. 1 mit nicht in Betrieb befindlicher ACM1 und
Fig. 3: eine schematische Darstellung eines Klimatisierungssystems gemäß dem Stand der Technik.

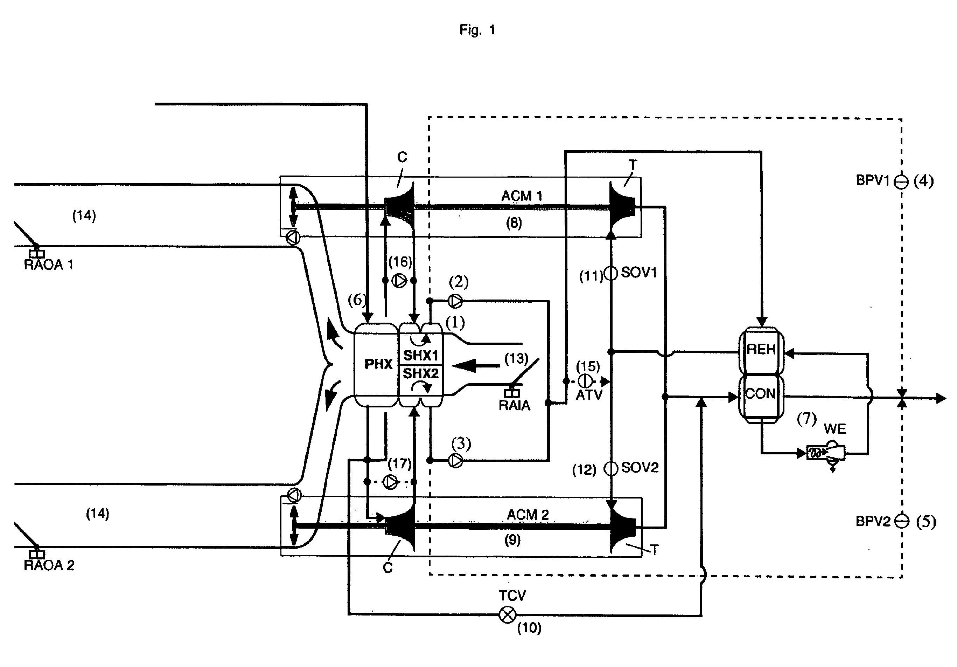

Gemäß Fig. 1, die ein Klimatisierungssystem nach der vorliegenden Erfindung zeigt, wird die gesamte Zapfluft zunächst dem Primärwärmetauscher PHX 6 zugeführt. Die darin vorgekühlte unter Druck stehende Luft wird anschließend den Kompressoren C zugeleitet. Die Kompressoren C sind mit den Turbinen T und dem Gebläse als Drei-Rad-Maschinen fest auf einer Welle angeordnet. Diese Kühlturbineneinheiten oder Air-Cycle-Machines ACM1 und ACM 2 sind mit den Bezugsnummern 8 und 9 gekennzeichnet.

Nach Verdichtung der Luft in den Kompressoren C wird die Luft erfindungsgemäß dem in die Wärmetauschereinheiten SHX 1 und SHX 2 getrennten Wärmetauscher 1 zugeführt. Auf der Auslaßseite dieser Wärmetauschereinheiten befinden sich die mit Rückschlagklappen 2, 3 versehenen Druckluftleitungen, durch die die beiden aus den Wärmetauschereinheiten SHX1 und SHX2 strömenden Luftströme zusammengeführt werden. Ferner sind auf der Auslaßseite der Wärmetauschereinheiten SHX1 und SHX2 jeweils eine Bypassleitung vorgesehen, die die Wärmetauschereinheiten SHX 1 und SHX2 mit dem Auslaß des Klimatisierungssystems bzw. der Mischkammer verbinden. In den Bypassleitungen sind die Bypassventile BPV1 und BPV2 (4, 5) angeordnet, die im Normalbetrieb, d. h. im Betrieb beider ACMs geschlossen sind.

Nach dem Passieren der Rückschlagklappen 2, 3 wird die Druckluft zusammengeführt und dem aus Wärmetauscher REH, Kondensator CON und Wasserabscheider WE bestehenden Hochdruck-Wasserabscheide-Kreislauf 7 zugeführt. Die Druckluft strömt zunächst durch den Wärmetauscher REH, in dem diese vorgekühlt wird. Die vorgekühlte Druckluft wird in dem Kondensator CON weiter abgekühlt. Aus der auf diese Weise abgekühlten Luft wird in dem Wasserabscheider WE Wasser größtenteils abgetrennt. Der verbleibende Luftstrom wird über den Wärmetauscher REH geringfügig aufgewärmt, um zu verhindern, daß die den Turbinen T zugeführte Luft mit Wassertröpfchen beladen ist.

Die den Hochdruck-Wasserabscheide-Kreislauf verlassende Druckluft wird geteilt und den Turbinen T zugeführt. Hier erfolgt die Entspannung und Abkühlung der Druckluft. Die entspannte und abgekühlte Luft wird zusammengeführt und über die kalte Seite des Kondensators CON schließlich der nicht dargestellten Mischkammer zugeleitet.

Zwischen den Zufuhr- und Abfuhrleitungen der Kompressoren C sind Bypassleitungen vorgesehen, in denen jeweils ein Rückschlagventil 16, 17 angeordnet ist. Ferner ist eine Bypassleitung mit Absperrventil 15 vorgesehen, die die Auslaßseiten der Wärmetauschereinheiten SHX1 und SHX2 unmittelbar mit den Eingangsseiten der Turbinen T verbindet. Dieser Bypass stellt keine Notwendigkeit dar. Dadurch wird jedoch die Durchlässigkeit erhöht. Das Öffnen ist nur möglich, wenn der Wasserabscheidkreislauf nicht benötigt wird (bei Flughöhen über 30 000 ft.). Im Bereich der Einlaßseiten der Turbinen T sind schließlich die Ventile SOV1 und SOV2 angeordnet, die mit den Bezugsziffern 11 und 12 gekennzeichnet sind und mittels derer die nicht in Betrieb befindlichen Turbinen T von dem den Hochdruck-Wasserabscheide-Kreislauf verlassenden Luftstrom getrennt werden können.

Mit 13 ist ein Stauluftkanal angedeutet, durch den mittels der Gebläse oder aufgrund des im Flug ausreichenden Staudrucks Luft durch die Wärmetauschereinheit SHX1, SHX2 sowie den Primärwärmetauscher PHX 6 geführt wird. Stromabwärts des Primärwärmetauschers 6 teilt sich der Stauluftkanal in die Teilkanäle 14. Die Stauluftmenge ist mittels entsprechender Drosselklappen eingangs- und ausgangsseitig des Stauluftkanals 13, 14 regelbar. Die Temperaturregelung erfolgt mittels der Stauluftklappen 13, 14 sowie des Ventils TCV 10.

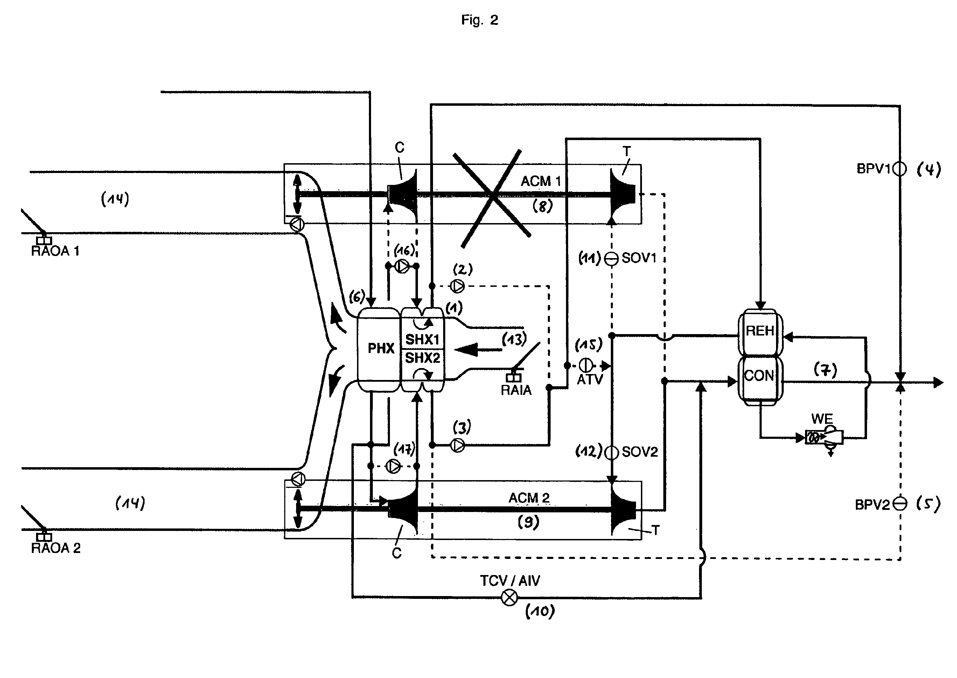

Fällt nun eine der Air-Cycle-Machines ACM aus oder soll die Durchlässigkeit des Klimatisierungssystems im Flug erhöht werden, ergibt sich der in Fig. 2 dargestellte Zustand. Hier ist beispielsweise die Air-Cycle-Machine ACM1 8 außer Betrieb gesetzt. Wie aus Fig. 2 hervorgeht, wird die den Primärwärmetauscher PHX 6 verlassende Luft nicht durch den oben dargestellten Kompressor C geführt, sondern mittels der darunter angeordneten Bypassleitung mit Rückschlagventil 16 unter Umgehung des Kompressors C der Wärmetauschereinheit SHX 1 zugeführt. Damit wird ein strömungsgünstiger Bypass des Kompressors C erreicht. Diese Luft strömt nunmehr durch die Wärmetauschereinheit SHX1 während die Wärmetauschereinheit SHX2 durch die von dem unten dargestellten Kompressor C der ACM 2 (9) komprimierte Luft durchströmt wird. Um einen Druckausgleich ausgangsseitig der Wärmetauschereinheiten SHX1 und 2 zu verhindern, sind die Rückschlagventile 2 und 3 angeordnet. In dem in Fig. 2 dargestellten Zustand verhindert das Rückschlagventil 2, daß die unter höherem Druck stehende, die Wärmetauschereinheit SHX2 verlassende Druckluft auf die Ausgangsseite der Wärmetauschereinheit SHX1 strömt und dann in die sich dort befindliche Bypassleitung gelangt.

Während die die Wärmetauschereinheit SHX2 verlassende Druckluft, wie zu Fig. 1 beschrieben, den Hochdruck-Wasserabscheide-Kreislauf sowie die Turbine T der ACM 2 durchläuft, strömt die die Wärmetauschereinheit SHX1 verlassende Luft über die Bypassleitung direkt zur Ausgangsseite des Hochdruck- Wasserabscheide-Kreislaufs. Dieser Bypassstrom wird dadurch ermöglicht, daß das Ventil BPV1 (4) der Bypassleitung geöffnet wird. Gegenüber dem Stand der Technik ergibt sich hierbei der Vorteil, daß der durch die Bypassleitung strömende Luftanteil ebenfalls durch den Wärmetauscher, d. h. im vorliegenden Fall durch die Wärmetauschereinheit SHX1 geführt wird, wodurch die gesamte Kühlkapazität dieses Wärmetauschers genutzt wird, auch wenn eine der Air-Cycle-Machines ausgefallen oder nicht in Betrieb ist. Auch bei Ausfall einer ACM ist kein Bypass durch das Ventil TCV erforderlich.

Wie aus Fig. 2 weiter hervorgeht, ist das Ventil SOV1 auf der Eingangsseite der Turbine T der ACM1 geschlossen, wodurch verhindert wird, daß die unter Druck stehende, den Hochdruck-Wasserabscheide-Kreislauf verlassende Luft über die stehende Turbine T geführt wird, was eine Verlustleistung zur Folge hätte. Die erfindungsgemäße Ausgestaltung des Klimatisierungssystems bringt den Vorteil mit sich, daß auch bei nicht in Betrieb befindlicher oder ausgefallener ACM eine hohe Kühlleistung erzielt wird. Eine größere Dimensionierung der Air-Cycle-Machines ACM oder der Wärmetäuscher ist hierzu nicht erforderlich, was insbesondere im Flugzeugbau erhebliche Vorteile mit sich bringt.

## Patentansprüche

1. Klimatisierungssystem zur Klimatisierung eines Raumes, insbesondere zur Klimatisierung einer Flugzeugkabine mit einem Wärmetauscher (1) zur Kühlung eines von einem Triebwerk oder Hilfsaggregat stammenden Druckluftstroms (Zapfluftstrom) sowie mit mindestens einer Entspannungseinrichtung pro Air-Cycle-Machine (ACM) zur Entspannung und Abkühlung komprimierter Luft, wobei die Entspannungseinrichtungen dem Wärmetauscher (1) nachgeschaltet sind und auslaßseitig mit einer Mischkammer bzw. dem zu klimatisierenden Raum in Verbindung stehen,
**dadurch gekennzeichnet,**
**daß** der Wärmetauscher (1) druckluftseitig in zwei Wärmetauschereinheiten (SHX 1, SHX 2) getrennt ist, deren Einlaß jeweils mit Druckluft beaufschlagt wird, wobei die Wärmetauschereinheiten (SHX 1, SHX 2) derart verschaltet sind, daß eine Strömung der Druckluft von dem Auslaß der einen zu der anderen Wärmetauschereinheit (SHX 1, SHX 2) unterbunden wird, und wobei die Wärmetauschereinheiten (SHX 1, SHX 2) auslaßseitig über eine Bypassleitung mit dem zu klimatisierenden Raum bzw. der Mischkammer oder dem Auslaß des Klimatisierungssystems verbindbar sind.

2. Klimatisierungssystem nach Anspruch 1, **dadurch gekennzeichnet, daß** Rückschlagklappen (2, 3) vorgesehen sind, die in den Auslaßleitungen der Wärmetauschereinheiten (SHX 1, SHX 2) angeordnet sind und die eine Strömung der Druckluft von dem Auslaß der einen zu der anderen Wärmetauschereinheit (SHX 1, SHX 2) verhindern.

3. Klimatisierungssystem nach Anspruch 1 oder 2, **dadurch gekennzeichnet, daß** ein erster und ein zweiter Kompressor (C) vorgesehen sind, deren Auslaß mit jeweils einer der Wärmetauschereinheiten (SHX 1, SHX 2) in Verbindung steht.

4. Klimatisierungssystem nach Anspruch 3, **dadurch gekennzeichnet, daß** die Entspannungseinrichtungen als erste und zweite Turbine (T) ausgeführt sind, wobei die erste Turbine mit dem ersten Kompressor und die zweite Turbine mit dem zweiten Kompressor jeweils auf einer Welle angeordnet sind.

5. Klimatisierungssystem nach Anspruch 4, **dadurch gekennzeichnet, daß** auf jeder der Wellen ein Gebläse angeordnet ist, das sich in einem Staufluftkanal (14) des Klimatisierungssystems befindet.

6. Klimatisierungssystem nach einem der Ansprüche 1 bis 5, **dadurch gekennzeichnet, daß** pro Air-Cycle-Machine (ACM) mehr als ein Kompressor und/oder mehr als eine Turbine vorgesehen sind.

7. Klimatisierungssystem nach einem der Ansprüche 1 bis 6, **dadurch gekennzeichnet, daß** der Wärmetauscher (1) in einem Stauluftkanal (11, 14) des Klimatisierungssystems angeordnet ist und daß dem Wärmetauscher (1) in Strömungsrichtung der Stauluft ein Primärwärmetauscher (6) nachgeschaltet ist oder daß Wärmetauscher und Primärwärmetauscher parallel angeordnet sind.

8. Klimatisierungssystem nach Anspruch 7, **dadurch gekennzeichnet, daß** jeder Wärmetauschereinheit (SHX 1, SHX 2) eine Primärwärmetauschereinheit derart zugeordnet ist, daß die Stauluft nach Durchströmen einer Wärmetauschereinheit (SHX 1, SHX 2) in die zugehörige Primärwärmetauschereinheit geführt wird.

9. Klimatisierungssystem nach Anspruch 7, **dadurch gekennzeichnet, daß** den Wärmetauschereinheiten (SHX 1, SHX 2) ein gemeinsamer oder getrennter Primärwärmetauscher (6) zugeordnet ist, durch den die Stauluft nach Durchströmen der Wärmetauschereinheiten (SHX 1, SHX 2) geführt wird.

10. Klimatisierungssystem nach einem der Ansprüche 5 bis 9, **dadurch gekennzeichnet, daß** der Stauluftkanal (13, 14) stromabwärts des Primärwärmetauschers (6) und/oder stromaufwärts des Wärmetauschers (1) in zwei Teilkanäle (14) getrennt ist, wobei in jedem der Teilkanäle (14) stromabwärts des Primärwärmetauschers (6) ein Gebläse angeordnet ist.

11. Klimatisierungssystem nach einem der Ansprüche 1 bis 10, **dadurch gekennzeichnet, daß** der Wärmetauscher (1) stauluftseitig derart ausgeführt ist, daß die Stauluft gemeinsam oder getrennt durch die Wärmetauschereinheiten (SHX 1, SHX 2) strömt.

12. Klimatisierungssystem nach einem der Ansprüche 7 bis 11, **dadurch gekennzeichnet, daß** der Primärwärmetauscher (6) einlaßseitig mit der vom Triebwerk stammenden Zapfluft beaufschlagt wird und auslaßseitig mit den Kompressoren (C) in Verbindung steht.

13. Klimatisierungssystem nach Anspruch 12, **dadurch gekennzeichnet, daß** eine Bypassleitung vorgesehen ist, die jeweils die Einlaß- und Auslaßseite des Kompressors (C) miteinander verbindet und in der eine Rückschlagklappe (16, 17) angeordnet ist.

14. Klimatisierungssystem nach einem der Ansprüche 7 bis 13, **dadurch gekennzeichnet, daß** der Primärwärmetauscher (6) druckluftseitig derart ausgeführt ist, daß die Druckluft diesen gemeinsam oder getrennt durchströmt.

15. Klimatisierungssystem nach einem der Ansprüche 1 bis 14, **dadurch gekennzeichnet, daß** wenigstens ein Wasserabscheidekreislauf (7) vorgesehen ist, der einlaßseitig mit dem Wärmetauscher (1) und auslaßseitig mit den Entspannungseinrichtungen in Verbindung steht.

16. Klimatisierungssystem nach Anspruch 15, **dadurch gekennzeichnet, daß** zwischen den Entspannungseinrichtungen und dem Wasserabscheidekreislauf (7) jeweils ein Absperrventil (11, 12) angeordnet ist.

17. Klimatisierungssystem nach Anspruch 15 oder 16, **dadurch gekennzeichnet, daß** eine Bypassleitung mit Absperrventil (15) vorgesehen ist, die zum Zwecke der Umgehung des Wasserabscheidekreislaufs (7) den Auslaß des Wärmetauschers (1) mit den Einlässen der Entspannungseinrichtungen verbindet.

18. Klimatisierungssystem nach einem der Ansprüche 15 bis 17, **dadurch gekennzeichnet, daß** zwei Wasserabscheidekreisläufe vorgesehen sind, die einlaßseitig jeweils mit einer Wärmetauschereinheit (SHX 1, SHX 2) und auslaßseitig mit jeweils einer der Entspannungseinrichtungen in Verbindung steht.

19. Klimatisierungssystem nach einem der Ansprüche 1 bis 18, **dadurch gekennzeichnet, daß** Sensoren vorgesehen sind, mittels derer ein Defekt oder Ausfall einer Entspannungseinrichtung erfaßbar ist.

20. Klimatisierungssystem nach Anspruch 19, **dadurch gekennzeichnet, daß** die Sensoren als Temperatur-, Druck- oder Drehzahlsensoren ausgeführt sind.

21. Klimatisierungssystem nach einem der Ansprüche 1 bis 20, **dadurch gekennzeichnet, daß** jede Air-Cycle-Machine mindestens eine Turbinenstufe mit einem Gebläse oder mindestens einem Kompressor umfaßt.
